# EUROPÄISCHE PATENTSCHRIFT

(11) **EP 3 133 777 B1**
(45) Veröffentlichungstag und Bekanntmachung des Hinweises auf die Patenterteilung: **03.04.2019**
(21) Anmeldenummer: 16154305.3
(22) Anmeldetag: 04.02.2016
(51) Int. Cl.: H04L 12/413, H04L 12/42, H04L 12/44, H04L 12/931, H04L 12/46, H04L 12/437

(54) **VERFAHREN UND HUB ZUM EINBINDEN EINES KOMMUNIKATIONSPARTNERS IN EIN INSBESONDERE RINGFÖRMIGES LEITUNGSGEBUNDENES KOMMUNIKATIONSNETZ**
METHOD AND HUB FOR INTEGRATING A COMMUNICATION PARTNER INTO A RING-SHAPED GRID-BOUND COMMUNICATION NETWORK
PROCEDE ET CONCENTRATEUR DESTINES A CONNECTER UN PARTENAIRE DE COMMUNICATION DANS UN RESEAU DE COMMUNICATION FILAIRE EN PARTICULIER CYCLIQUE

(43) Veröffentlichungstag der Anmeldung: 22.02.2017
(73) Patentinhaber: Piller Group GmbH, 37520 Osterode am Harz (DE)
(72) Erfinder: SCHWARZ, Thilo, 37520 Osterode am Harz (DE)
(74) Vertreter: REHBERG HÜPPE + PARTNER

(56) Entgegenhaltungen:
- EP-A1- 0 830 768
- WO-A1-2010/115260
- "IEEE Standard for Ethernet ; 802.3-2012_section1", IEEE DRAFT; 802.3-2012_SECTION1, IEEE-SA, PISCATAWAY, NJ USA, Bd. 1149.10, 15. Oktober 2013 (2013-10-15) , Seiten 1-634, XP068066250, [gefunden am 2013-10-15]

## Beschreibung

### TECHNISCHES GEBIET DER ERFINDUNG

Die Erfindung bezieht sich auf ein Verfahren zum Einbinden eines Kommunikationspartners über einen Hub, der drei Ports mit jeweils einem Sender und einem Empfänger aufweist, in ein insbesondere ringförmiges leitungsgebundenes Kommunikationsnetz, wobei jede Nachricht, die an einem der drei Ports des Hubs von dem dortigen Empfänger empfangen wird, nach vorgegebenen Regeln an die anderen Ports des Hubs weitergeleitet wird, deren Sender die weitergeleitete Nachricht senden. Weiterhin bezieht sich die vorliegende Erfindung auf einen entsprechenden Hub und auf ein Kommunikationsnetz mit mehreren Kommunikationspartnern und mit mehreren solchen Hubs.

### STAND DER TECHNIK

Eine bekannte Vernetzungstechnik für leitungsgebundene Kommunikationsnetze ist der sogenannte Token-Ring. Ein Token-Ring-Kommunikationsnetz arbeitet nach dem Token-Passing-Zugriffsverfahren und weist eine logische Ring-Topologie auf. Trotz der logischen Ring-Topologie können alle Kommunikationsteilnehmer an einen einzigen Ringleitungsverteiler angeschlossen sein, so dass die physikalische Topologie sternförmig ist. Es können auch mehrere Ringleitungsverteiler zu einer physikalischen Stern-Linie oder einem Stern-Ring zusammengeschlossen sein. Der oder die Ringleitungsverteiler verbindet/verbinden die angeschlossenen Kommunikationspartner untereinander so, dass ein Token über den logischen Ring kreist, wobei das Token stetig von einem Kommunikationspartner in dem Ring zu dem nächsten weitergereicht wird. Möchte ein Kommunikationspartner eine Nachricht versenden, wartet er, bis ihn das Token erreicht. Dann hängt er seine Nachricht an das Token an. Zugleich ergänzt er das Token um Steuersignale. Aus einem freien Token wird so ein Datenrahmen. Danach setzt der Kommunikationspartner das Token wieder auf den Ring, wo es genau wie zuvor ein freies Token von den einzelnen Kommunikationspartnern weitergereicht wird. Jeder Kommunikationspartner prüft, ob die an das Token angehängte Nachricht an ihn adressiert ist. Anderenfalls setzt er das Token unverändert auf den Ring zurück. Erhält der vorgesehene Empfänger das Token mit der an ihn adressierten Nachricht, kopiert er die Nachricht und quittiert den Nachrichtenempfang. Der Sender der Nachricht erhält die Quittung und sendet das Token mit der nächsten Nachricht oder setzt ein freies Token auf den Ring. Dabei darf der Sender das Token nur für eine bestimmte Zeit für sich in Anspruch nehmen, bevor er es wieder freigeben muss. Dadurch wird jedem Kommunikationspartner in dem Ring garantiert, dass er Nachrichten über den Ring senden kann.

Die Datenübertragungsrate in einem Token-Ring-Kommunikationsnetz ist begrenzt. Zudem müssen Vorkehrungen für verschiedene Störfälle getroffen werden. Zu diesen Störfällen gehört: Das Token geht verloren. Ein Token mit einer Nachricht kreist endlos, weil es nicht von seinem Empfänger vom Ring genommen wird, da dieser überhaupt nicht existiert. Mehrere Token kreisen gleichzeitig auf dem Ring. Ein Kommunikationspartner fällt aus. Wenn sogar ein Ringleitungsverteiler ausfällt, wird ein Token-Ring-Kommunikationsnetz funktionslos.

Als Hub wird in dieser Beschreibung, so wie es in der Telekommunikation üblich ist, ein Gerät bezeichnet, das Netzknoten eines Kommunikationsnetzes miteinander verbindet. Anders als ein Switch, der sich zielgerichtet den Port eines in einer weitergeleiteten Nachricht codierten Empfängers sucht, leitet ein Hub eine Nachricht unabhängig von deren Inhalt weiter. Ein sogenannter Repeating-Hub leitet eine Nachricht, die an einem seiner Ports eingeht, an alle seine anderen Ports weiter, um sie von dort erneut auszusenden.

In einem Ethernet-Kommunikationsnetz wird eine Kollision von Nachrichten, die von verschiedenen Kommunikationspartner gleichzeitig oder zumindest überlappend ausgesendet werden, durch einen erhöhten Signalpegel auf den Datenübertragungswegen registriert. Bei einem CSMA/CD (Carrier Sense Multiple Access/Collision Detection)-Verfahren, wie es bei einem mit Hubs realisierten Ethernet-Kommunikationsnetz zur Anwendung kommen kann, muss eine Nachricht eine Mindestlänge von der maximalen RTDT (Round Trip Delay Time) aufweisen. Die RTDT ist die Ringlaufzeit der Nachrichten in einem ringförmigen Kommunikationsnetz bzw. die Zeit, die eine Nachricht maximal benötigt, um von einem Punkt zu dem von ihm am weitesten entfernten Punkt des Kommunikationsnetzes und von dort wieder zurück zu gelangen. Durch die Mindestlänge wird sichergestellt, dass sich eine Kollision, die erst kurz vor dem Adressaten der Nachricht auftritt, noch bis zum Absender der Nachricht ausbreitet, ohne dass dieser das Senden bereits beendet hat. Somit erkennt der Sender die Kollision und weiß damit, dass seine Nachricht nicht richtig beim Adressaten angekommen ist, und sendet die Nachricht erneut.

Ein Vollduplex-Kommunikationskanal erlaubt das gleichzeitige Übermitteln von zwei Nachrichten in einander entgegen gesetzten Richtungen über den Kommunikationskanal. Ein Halbduplex-Kommunikationskanal erlaubt hingegen zu jedem Zeitpunkt nur das Übermitteln einer Nachricht, wenn auch in beliebiger Richtung über den Kommunikationskanal.

Bei einer Zeitscheibenkommunikation über ein Kommunikationsnetz steht das Kommunikationsnetz jedem Kommunikationspartner für jeweils eine von mehreren periodisch aufeinander folgenden Zeitscheiben exklusiv zur Verfügung, um seine Nachrichten zu senden.

Die WO 2010/115260 A1 beschreibt ein Verfahren mit den Merkmalen des Oberbegriffs des unabhängigen Patentanspruchs 1 und einen Hub mit den Merkmalen des Oberbegriffs des unabhängigen Patentanspruchs 7. Der Hub leitet empfangene Nachrichten nach Regeln weiter, die von dem Inhalt der Nachrichten abhängig sind. Konkret weist der Hub ein Paar von 802.3 MAC-Schnittstellen auf.

Nach dem IEEE Standard for Ethernet; 802.3-2012_section1, sendet ein IEEE 802.3 MAC kein Frame an den Physical Layer, während dort gerade ein Frame gesendet wird.

### AUFGABE DER ERFINDUNG

Der Erfindung liegt die Aufgabe zugrunde, ein Verfahren zum Einbinden eines Kommunikationspartners über einen Hub in ein Kommunikationsnetz, einen solchen Hub und ein Kommunikationsnetz mit mehreren Kommunikationspartner und mehreren solchen Hubs aufzuzeigen, bei denen eine kollisionsfreie Kommunikation der Kommunikationspartner über das Kommunikationsnetz durch einfache Regeln unterstützt wird, nach denen der jeweilige Hub eine an einem seiner Ports empfangene Nachricht an seine anderen Ports weiterleitet.

### LÖSUNG

Die Aufgabe der Erfindung wird durch ein Verfahren mit den Merkmalen des unabhängigen Patentanspruchs 1 oder 2, einen Hub mit den Merkmalen des unabhängigen Patentanspruchs 6 oder 7 und ein Kommunikationsnetz mit den Merkmalen des nebengeordneten Patentanspruchs 10 oder des nebengeordneten Patentanspruchs 11 gelöst. Bevorzugte Ausführungsformen des erfindungsgemäßen Verfahrens, des erfindungsgemäßen Hubs und des erfindungsgemäßen Kommunikationsnetzes sind in den abhängigen Patentansprüchen definiert.

### BESCHREIBUNG DER ERFINDUNG

Bei einem erfindungsgemäßen Verfahren zum Einbinden eines Kommunikationspartners über einen Hub, der drei Ports mit jeweils einem Sender und einem Empfänger aufweist, in ein insbesondere ringförmiges leitungsgebundenes Kommunikationsnetz, wobei jede Nachricht, die an einem der drei Ports von dem dortigen Empfänger empfangen wird, nach vorgegebenen Regeln an die anderen Ports weitergeleitet wird, deren Sender die weitergeleitete Nachricht senden, wird nach diesen Regeln keine Nachricht an einen der anderen Ports weitergeleitet, dessen Sender zu Beginn des Empfangens der jeweiligen Nachricht an dem einen Port bereits sendet. Die Nachricht wird also weder an einen Port weitergeleitet, dessen Sender bereits eine andere Nachricht sendet, noch an einen Port, dessen Sender bereits dieselbe Nachricht sendet.

Dass der Hub drei Ports aufweist, schließt ausdrücklich nicht aus, dass der Hub mehr als drei Ports umfasst, auch wenn er bei dem erfindungsgemäßen Verfahren häufig genau drei Ports aufweist.

Das leitungsgebundene Kommunikationsnetz ist insbesondere ringförmig. Damit ist gemeint, dass Leitungen die Hubs aller Kommunikationspartner zu einem physikalischen Ring verbinden. Dass das leitungsgebundene Kommunikationsnetz insbesondere ringförmig ist, schließt aber ausdrücklich nicht aus, dass das Kommunikationsnetz bei dem erfindungsgemäßen Verfahren linienförmig, stern-linienförmig oder stern-ringförmig sein kann.

Bei dem erfindungsgemäßen Verfahren sind die Regeln, nach denen die an einem der Ports des jeweiligen Hubs empfangene Nachricht an die anderen Ports weitergeleitet wird, keine solchen, die sich auf den Inhalt der jeweiligen Nachricht beziehen, sondern ausschließlich solche, die sich auf den Zustand des Hubs zu Beginn des Empfangens der jeweiligen Nachricht beziehen. Der Hub ist damit kein einfacher Repeating-Hub. Er bleibt damit ein echter Hub und wird nicht etwa zu einem Switch.

Dass bei dem erfindungsgemäßen Verfahren keine Nachricht, die an einem der Ports des Hubs eingeht, an einen der anderen Ports weitergeleitet wird, dessen Sender zu Beginn des Empfangens der jeweiligen Nachricht an dem einen Port bereits sendet, bedeutet, dass diese Nachricht weder sofort noch verzögert an einen anderen Port weitergeleitet wird, dessen Sender bereits belegt ist. Vielmehr wird die Nachricht zwischen dem Port an dem sie empfangen wird und jedem anderen Port mit bereits belegtem Sender gestoppt. Auf diese Weise wird sowohl eine Kollision der jeweiligen Nachricht mit sich selbst oder einer anderen Nachricht verhindert als auch ein unbegrenztes Kreisen einer Nachricht in einem ringförmigen Kommunikationsnetz verhindert. Vielmehr wird, soweit eine Mindestlänge der Nachricht länger als eine Ringlaufzeit der Nachricht in dem ringförmigen Kommunikationsnetz ist, jede Nachricht beim erneuten Eintreffen an dem Hub, von dem sie erstmalig weitergeleitet wurde, nicht nochmals weitergeleitet.

Bei Vollduplex-Kommunikationskanälen zwischen den Ports des Hubs und dem Kommunikationspartner bzw. benachbarten Hubs kann nach den Regeln jede Nachricht an jeden der anderen Ports weitergeleitet werden, dessen Sender zu Beginn des Empfangens der jeweiligen Nachricht an dem einen Port nicht, d. h. weder dieselbe noch eine andere Nachricht sendet. Bei Vollduplex-Kommunikationskanälen steht ein Port für das Weiterleiten einer Nachricht zum Versenden über seinen Sender auch dann zur Verfügung, wenn sein Empfänger gleichzeitig eine andere Nachricht empfängt.

Bei Vollduplex-Kommunikationskanälen ist es alternativ möglich und bei Halbduplex-Kommunikationskanälen ist es notwendig, dass bei dem erfindungsgemäßen Verfahren jede Nachricht nur an jeden der anderen Ports weitergeleitet wird, dessen Sender zu Beginn des Empfangens der jeweiligen Nachricht an dem einen Port nicht sendet und dessen Empfänger zu Beginn des Empfangens der jeweiligen Nachricht an dem einen Port nicht, d. h. weder dieselbe noch eine andere Nachricht empfängt. Damit wird eine Kollision von in unterschiedlicher Richtung über die Halbduplex-Kommunikationskanäle übertragenen Nachrichten verhindert.

Um den Kommunikationspartner nach dem erfindungsgemäßen Verfahren praktisch in das Kommunikationsnetz einzubinden, kann der Hub über zwei seiner drei Ports jeweils mit einem weiteren Hub des Kommunikationsnetzes verbunden werden, während der Kommunikationspartner an den dritten Port des Hubs angeschlossen wird. Die Hubs können dabei zu einem ringförmigen Kommunikationsnetz zusammengeschlossen werden. Um ein Kreisen von Nachrichten in dem ringförmigen Kommunikationsnetz mit Hilfe der Regeln, nach denen Nachrichten in jedem Hub weitergeleitet werden, zu verhindern, wird eine Mindestlänge aller Nachrichten festgelegt, die über das Kommunikationsnetz verbreitet werden. Diese Mindestlänge ist länger als eine Ringlaufzeit der Nachrichten von einem Hub über das ringförmige Kommunikationsnetz bis zurück zu demselben Hub.

Ein erfindungsgemäßer Hub zum Einbinden eines Kommunikationspartners in ein insbesondere ringförmiges kabelgebundenes Kommunikationsnetz, wobei der Hub drei Ports aufweist, wobei jeder Port einen Empfänger und einen Sender aufweist und wobei eine Steuerung des Hubs derart ausgebildet ist, dass der Hub jede Nachricht, die der Empfänger an einem der drei Ports empfängt, nach vorgegebenen Regeln an die anderen Ports weiterleitet, deren Sender die Nachricht senden, leitet nach den Regeln keine Nachricht an einen der anderen Ports weiter, dessen Sender zu Beginn des Empfangens der jeweiligen Nachricht an dem einen Port bereits sendet. Dabei kann der Hub nach den Regeln jede Nachricht an jeden der anderen Ports weiterleiten, dessen Sender zu Beginn des Empfangens der jeweiligen Nachricht an dem einen Port nicht sendet. Alternativ leitet der Hub jede Nachricht an jeden der anderen Ports weiter, dessen Sender zu Beginn des Empfangens der jeweiligen Nachricht an dem einen Port nicht sendet und dessen Empfänger zu Beginn des Empfangens der jeweiligen Nachricht an dem einen Port nicht empfängt. Mit der ersten Alternative ist der Hub auf Vollduplex-Kommunikationskanäle abgestimmt. Mit der zweiten Alternative ist der Hub auf Halbduplex-Kommunikationskanäle abgestimmt, kann aber auch mit Vollduplex-Kommunikationskanälen verwendet werden.

Die Regeln, nach denen der Hub die Nachrichten weiterleitet, können in einem PLD (Programmable Logic Device), wie beispielsweise einem CPLD (Complex Programmable Logic Device), einem FPGA (Field Programmable Gate Array) oder dergleichen, der Steuerung des Hubs programmiert sein. Damit ist eine variable Festlegung der Regeln möglich. Grundsätzlich können die Regeln aber auch unveränderbar in der Steuerung programmiert oder anderweitig festgelegt sein.

Der Sender und der Empfänger an jedem Port des erfindungsgemäßen Hubs können zu einem kombinierten Sender-Empfänger oder Transceiver zusammengefasst sein.

An jedem seiner mindestens drei Ports kann der erfindungsgemäße Hub einen physikalischen Anschluss mit einer Gegenstelle aufweisen, bei der es sich um eine PHY (Physical/Physical Layer) oder einen MAC (Media Access Controller) handeln kann. Konkret kann der erfindungsgemäße Hub an zwei seiner drei Ports jeweils einen Anschluss mit einer PHY für einen weiteren Hub und an dem dritten Port einen Anschluss mit einem MAC für den Kommunikationspartner aufweisen.

Ein erfindungsgemäßes Kommunikationsnetz umfasst mehrere Kommunikationspartner und mehrere erfindungsgemäße Hubs. Dabei sind die Hubs insbesondere über ihre beiden eine PHY aufweisenden Anschlüsse mit jeweils einem weiteren der Hubs und über ihren den MAC aufweisenden Anschluss mit einem Kommunikationspartner verbunden.

Wenn die Hubs zu einem Ringnetz zusammengeschlossen sind, ist eine Mindestlänge aller Nachrichten in dem Kommunikationsnetz vorzugsweise länger als eine Ringlaufzeit der Nachrichten in dem ringförmigen Kommunikationsnetz von einem Hub bis zurück zu demselben Hub.

Logisch ist auch ein ringförmiges erfindungsgemäßes Kommunikationsnetz kein geschlossener Ring. Eine über einen Hub ausgesandte Nachricht läuft an demselben Hub aus und kreist nicht in dem physikalischen Ring. Das erfindungsgemäße Kommunikationsnetz ist daher logisch als Linie anzusehen, deren Anfangs- und Endpunkt an dem Hub liegen, über den die jeweilige Nachricht ausgesandt wird.

Ein erfindungsgemäßes Kommunikationsnetz mit erfindungsgemäßen Hubs ist insbesondere für eine Zeitscheibenkommunikation der darüber verbundenen Kommunikationspartner geeignet, bei der nacheinander jedem der Kommunikationspartner das Kommunikationsnetz für eine Zeitscheibe exklusiv zur Verfügung steht. Wenn dann alle Kommunikationskanäle zwischen den Hubs und den angeschlossenen Kommunikationspartnern Vollduplex-Kommunikationskanäle sind und wenn nach den Regeln jede Nachricht an jeden der anderen Port des jeweiligen Hubs weitergeleitet wird, dessen Sender zu Beginn des Empfangens der jeweiligen Nachricht an dem einen Port des jeweiligen Hubs nicht sendet, wird beim Einhalten der bereits definierten Mindestlänge der Nachrichten nicht nur jede Nachricht an dem Hub wieder gestoppt, der sie zuerst weitergeleitet hat, sondern die Nachricht wird auch an den angeschlossenen Kommunikationspartner, von dem sie stammt, zurückgeleitet. So erhält der Absender der Nachricht eine Bestätigung für ihre erfolgte Rundsendung in dem ringförmigen Kommunikationsnetz. Weiterhin erkennt der Absender, beispielsweise vor dem vollständigen Etablieren einer Zeitscheibenkommunikation aller Kommunikationspartner, eine Kollision seiner Nachricht mit einer anderen Nachricht eines anderen Kommunikationspartners, wenn er diese andere Nachricht empfängt, bevor er seine eigene Nachricht wieder empfangen hat. Bei dem erfindungsgemäßen Kommunikationsnetz bedeutet eine Kollision von Nachrichten jedoch nicht, dass diese auf einer Leitung zwischen zwei Hubs unerlaubt zusammen treffen, weil dies von den Hubs nach den Regeln verhindert wird. Vielmehr bedeutet es, dass die Nachrichten so zeitlich überlappend über das Kommunikationsnetz verbreitet werden, dass einzelne Kommunikationspartner möglicherweise nicht beide Nachrichten erhalten.

Bei einem ringförmigen Kommunikationsnetz mit Halbduplex-Kommunikationskanälen wird die von einem Hub in beide Richtungen auf den Ring gegebene Nachricht an einem auf der gegenüberliegenden Seite des Rings liegenden Hub gestoppt.

Bei einem ringförmigen Kommunikationsnetz wird an jeden Kommunikationspartner, der an einen der Hubs angeschlossen ist, jeweils die Kopie der Nachricht weitergeleitet, die den jeweiligen Hub in der einen oder der anderen Richtung zuerst erreicht. Bei Vollduplex-Kommunikationskanälen gehen an jedem Hub grundsätzlich beide Kopien jeder Nachricht ein, wobei eine der beiden Kopien an den angeschlossenen Kommunikationspartner und jede Kopie an den jeweils nächsten Hub weitergeleitet wird. Bei Halbduplex-Kommunikationskanälen erhält nur der Hub, an dem die Nachricht gestoppt wird, beide Kopien der Nachricht, und er leitet eine Kopie an den angeschlossenen Kommunikationspartner und keine Kopie an einen benachbarten Hub weiter.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: illustriert ein Kommunikationsnetz mit mehreren Hubs und darüber angeschlossenen Kommunikationspartnern.
- **Fig. 2**: illustriert das Weiterleiten einer Nachricht, die an einem Port eines Hubs des Kommunikationsnetzes gemäß Fig. 1 empfangen wird, an die anderen Ports des Hubs.
- **Fig. 3**: illustriert zusätzlich zu Fig. 2 das Empfangen einer weiteren Nachricht an einem der Ports des Hubs und deren selektives Weiterleiten an die anderen Ports des Hubs.
- **Fig. 4**: illustriert zusätzlich zu Fig. 2 das Empfangen einer weiteren Nachricht an einem der Ports des Hubs und deren Nichtweiterleiten an die anderen Ports des Hubs bei einer anderen Ausführungsform der Erfindung als in Fig. 3.
- **Fig. 5**: illustriert eine Fig. 3 entsprechende Weiterleitung von Nachrichten durch einen Hub mit anderer Verteilung, aber gleicher Funktionalität seiner Ports.
- **Fig. 6**: illustriert zusätzlich zu Fig. 5 den Eingang noch einer weiteren Nachricht an einem Port des Hubs, die nicht weitergeleitet wird.
- **Fig. 7**: illustriert eine mögliche physikalische Ausführungsform eines erfindungsgemäßen Hubs.
- **Fig. 8**: illustriert ein erfindungsgemäßes Kommunikationsnetz mit mehreren Hubs, mehreren darüber angeschlossenen Kommunikationspartnern und Vollduplex-Kommunikationskanälen; und
- **Fig. 9**: illustriert ein erfindungsgemäßes Kommunikationsnetz mit mehreren Hubs, mehreren darüber angeschlossenen Kommunikationspartnern und Halbduplex-Kommunikationskanälen.

### FIGURENBESCHREIBUNG

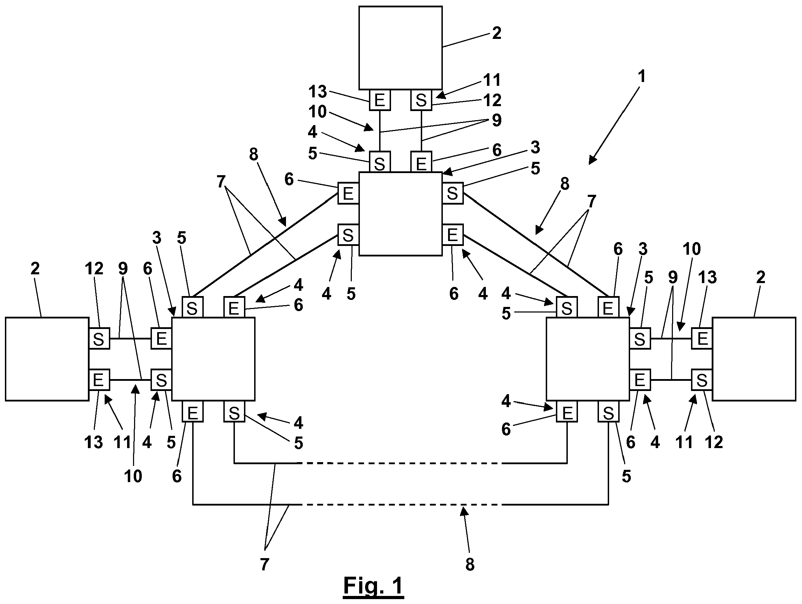

Das in **Fig. 1** dargestellte Kommunikationsnetz 1 umfasst mehrere Kommunikationspartner 2, die jeweils über einen ihnen individuell zugeordneten Hub 3 in das Kommunikationsnetz 1 eingebunden sind. Jeder Hub 3 weist drei Ports 4 mit jeweils einem Sender 5 und einem Empfänger 6 auf. Die Hubs 3 sind durch Leitungen 7 zu einem physikalischen Ring miteinander verbunden. Zwischen Ports 4 von benachbarten Hubs 3 bilden die Leitungen 7 jeweils einen leitungsgebundenen Kommunikationskanal 8 aus. Hierbei kann es sich um einen Vollduplex-Kommunikationskanal handeln. In dem erfindungsgemäßen Kommunikationsnetz 1 müssen die Hubs 3 über die Leitungen 7 nicht zu einem physikalischen Ring zusammengeschlossen sein. Sie können auch in einer Linie angeordnet sein. Grundsätzlich kann diese Linie auch an einem oder mehreren Hubs 3 verzweigen. Insbesondere ist das Kommunikationsnetz 1, wenn bei diesem die Hubs 3 zu einem physikalischen Ring zusammengeschlossen sind, aber auch weiter funktionsfähig, wenn der Ring durch eine Störung einer Leitung 7 oder eines Hubs 3 unterbrochen wird.

Gemäß Fig. 1 ist über jeden der mit den Leitungen 7 zu einem physikalischen Ring zusammengeschlossenen Hubs 3 ein Kommunikationspartner 2 in das Kommunikationsnetz 1 eingebunden. Dabei bilden Leitungen 9 jeweils einen Kommunikationskanal 10 zwischen dem dritten Port 4 jedes Hubs 3 und einem Port 11 des jeweiligen Kommunikationspartners 2 aus, der ebenfalls mit einem Sender 12 und einem Empfänger 13 versehen ist. Die Leitungen 9 und die Kommunikationskanäle 10 können physikalisch anders ausgelegt sein als die Leitungen 7 und die Kommunikationskanäle 8. Die daran angeschlossenen Sender 5, 12 und Empfänger 6, 13 sind entsprechend auszubilden. Wenn die Kommunikationskanäle 8 Vollduplex-Kommunikationskanäle sind trifft dies aber in aller Regel auch auf die Kommunikationskanäle 10 zu und umgekehrt. In Fig. 1 umfasst das Kommunikationsnetz 1 drei Hubs 3 und darüber eingebundene Kommunikationspartner 2. Das Kommunikationsnetz 1 kann aber auch eine deutlich größere Anzahl an Hubs 3 und Kommunikationspartnern 2 umfassen. Die Kommunikation der Kommunikationspartner 2 über das Kommunikationsnetz 1 kann insbesondere nach einem Zeitscheibenverfahren erfolgen, bei dem das Kommunikationsnetz 1 den einzelnen Kommunikationspartnern 2 nacheinander für jeweils eine einer Reihe von periodisch aufeinander abfolgenden Zeitscheiben exklusiv zum Übermitteln von Nachrichten zur Verfügung steht. Das Kommunikationsnetz 1 ist aber nicht an ein solches Zeitscheibenverfahren gebunden. Es ist auch nicht an eine bestimmte Form der übermittelten Nachrichten gebunden, außer dass diese Nachrichten vorzugsweise eine Mindestlänge aufweisen, die größer als eine Ringlaufzeit der Nachrichten in dem ringförmigen Kommunikationsnetz 1 ist. Die Besonderheit des erfindungsgemäßen Kommunikationsnetzes 1 besteht darin, nach welchen Regeln Nachrichten, die an einem Port 4 eines der Hubs 3 empfangen werden, an seine anderen Ports 4 weitergeleitet werden. Diese Regeln sind von dem Inhalt der empfangenen Nachrichten unabhängig, d. h. sie hängen ausschließlich von dem aktuellen Zustand des jeweiligen Hubs 3 ab, wie im Folgenden erläutert wird.

In Bezug auf die Regeln, nach denen empfangene Nachrichten von den Hubs 3 weitergeleitet werden, sind die drei Ports 4 jedes Hubs 3 gleichwertig. Die Regeln hängen also zum Beispiel nicht davon ab, ob der jeweilige Port 4 an eine Leitung 7 zu dem Port 4 eines anderen Hubs 3 oder an eine Leitung 9 zu dem Port 11 eines Kommunikationspartners 2 angeschlossen ist.

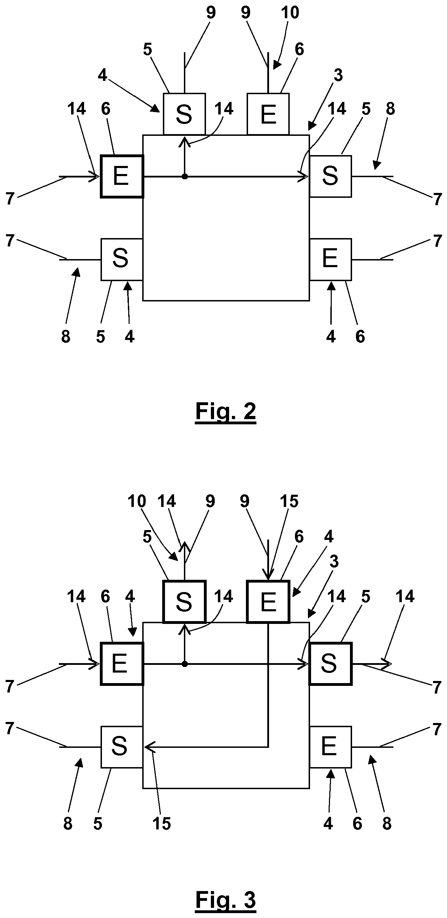

**Fig. 2** illustriert, dass an einem mit fetter Umrandung markierten Empfänger 6 eines Ports 4 des dargestellten Hubs 3 eine Nachricht 14 empfangen wird, was mit einer Pfeilspitze an der entsprechenden Leitung 7 angedeutet ist. Diese Nachricht 14 wird an die Sender 5 beider anderen Ports 4 des Hubs 3 weitergeleitet, weil diese nicht belegt sind, d. h. zu Beginn des Empfangens der Nachricht 14 an dem einen Port 4 nicht bereits dieselbe oder eine andere Nachricht senden.

**Fig. 3** illustriert zusätzlich zu der Situation in Fig. 2, dass die Sender 5 der beiden anderen Ports 4 die Nachricht 14 weitersenden und dass ein Empfänger 6 eines der beiden anderen Ports 4 eine weitere Nachricht 15 empfängt. Entsprechend sind diese Sender 5 und ist dieser Empfänger 6 ebenfalls fett markiert. Diese weitere Nachricht 15 wird von dem Hub 3 nach der bereits anhand von Fig. 2 erläuterten Regel ausschließlich an den Sender 5 des Ports 4 weitergeleitet, von dessen Empfänger 6 die Nachricht 14 empfangen wird, weil der Sender 5 des anderen Ports 4, an dem die weitere Nachricht 15 nicht empfangen wird, bereits mit dem Weiterleiten der Nachricht 14 beschäftigt ist.

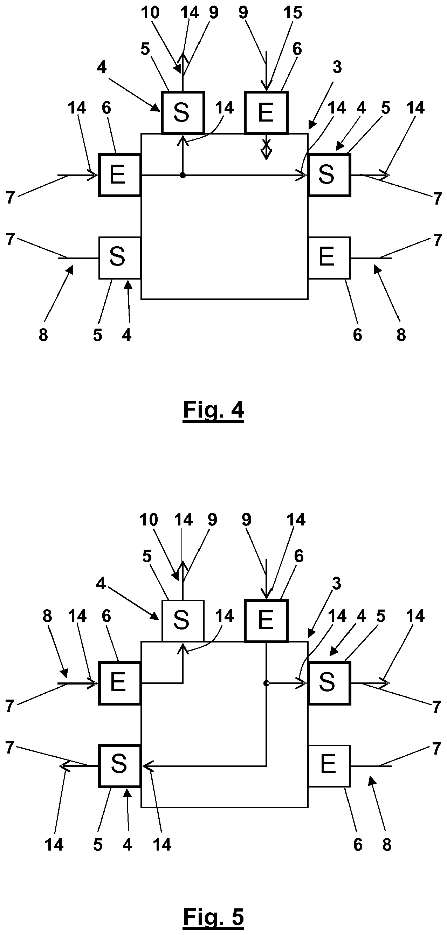

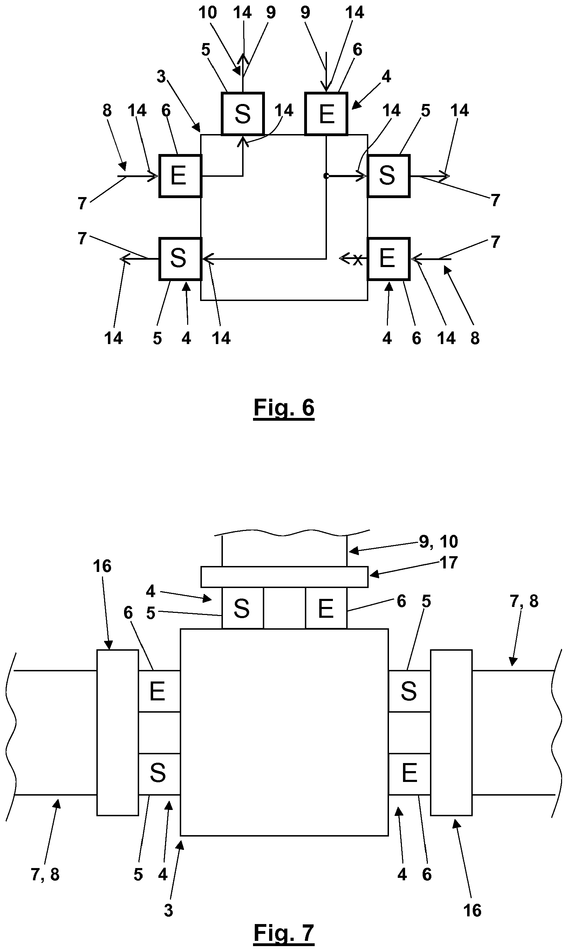

**Fig. 4** illustriert die Auswirkungen einer gegenüber den Fig. 2 und 3 verschärften Regel für das Weiterleiten einer Nachricht 14, 15 durch den Hub 3. Nach dieser verschärften Regel wird jede Nachricht 14, 15 nur an die Sender 5 solcher Ports 4 weitergeleitet, die zu Beginn des Empfangens der jeweiligen Nachricht 14, 15 weder mit dem Senden noch dem Empfangen irgendeiner Nachricht beschäftigt sind. Entsprechend wird hier die weitere Nachricht 15, obwohl sie in derselben Situation, wie sie in Fig. 3 dargestellt ist, an dem Empfänger 6 des einen Ports 4 empfangen wird, nicht an einen der anderen Ports 4 weitergeleitet, weil bei dem einen Port 4 der Empfänger 6 die Nachricht 14 empfängt, während an dem anderen Port 4 der Sender 5 die an ihn weitergeleitete Nachricht 14 sendet. Die verschärfte Regel gemäß Fig. 4 ist auf durch die Leitungen 7 und 9 ausgebildete Halbduplex-Kommunikationskanäle 8 und 10 abgestimmt. Sie vermeidet, dass einer der Kommunikationskanäle 8, 10 mit Nachrichten 14, 15 in einander entgegengesetzten Richtungen beaufschlagt wird. In Fig. 4 sind wie in den vorhergehend erläuterten Figuren 2 und 3 und in den nachfolgend erläuterten Figuren 5 und 6 alle aktuell, das heißt mit dem Beginn des Empfangens der jeweils letzten Nachricht 14 oder 15 aktiven Sender 5 und Empfänger 6 fett markiert.

Obwohl alle Ports 4 jedes Hubs 3 in Bezug auf die Regeln des Weiterleitens von Nachrichten 14, 15 gleich sind, stellt **Fig. 5** erneut eine grundsätzlich Fig. 3 entsprechende Situation dar. Hier wird jedoch die zuerst empfangene Nachricht 14 an dem Empfänger 6 empfangen, an den eine der Leitungen 9 angeschlossen ist, und sie wird an beide Sender 5 weitergeleitet, die an eine der Leitungen 7 angeschlossen sind. Dies entspricht der Situation, dass von dem Kommunikationspartner 2, der über die Leitungen 9 angeschlossen ist, die Nachricht 14 über das Kommunikationsnetz 1 gemäß Fig. 1 ausgesendet wird. Die Ausbreitung der Nachricht 14 von dem Hub 3 erfolgt dann in beiden Richtungen zu den benachbarten Hubs 3. Nach einem Umlauf in dem physikalischen Ring des Kommunikationsnetzes 1 kommt die Nachricht 14 zunächst an dem einen der beiden Empfänger 6, die an die Leitungen 7 angeschlossen sind, wieder an. Sie wird von dort an den Sender 5 weitergeleitet, der an die Leitung 9 angeschlossen ist. Der darüber angeschlossene Kommunikationspartner 2 erhält somit eine Quittung dafür, dass die Nachricht 14 einmal in dem Kommunikationsnetz 1 umgelaufen ist. Die Nachricht 14 wird jedoch nicht erneut auf das Kommunikationsnetz 1 gegeben.

**Fig. 6** illustriert die Situation, in der auch an dem zweiten an eine der Leitungen 7 angeschlossenen Empfänger 6 die Nachricht 14 wieder eingeht. Diese zweite Kopie der Nachricht 14 wird an keinen der Sender 5 des Hubs 3 weitergeleitet. Es versteht sich, dass das anhand von Fig. 5 und 6 erläuterte Stoppen einer bereits einmal in dem physikalischen Ring umgelaufenen Nachricht 14 durch den Hub 3, über den der Kommunikationspartner 2 eingebunden ist, von dem die Nachricht 14 ursprünglich ausging, nur dann funktioniert, wenn die Nachricht 14 länger ist als ihre Ringlaufzeit in dem physikalischen Ring des Kommunikationsnetzes 1. Nur dann sind die an die Leitungen 7 angeschlossenen Sender 5 bei dem Wiedereintreffen der Nachricht 14 an dem Hub 3 noch mit dem Senden derselben Nachricht 14 beschäftigt, d. h. belegt, so dass kein Weiterleiten der Nachricht 14 an diese Sender 5 und entsprechend kein erneutes Umlaufen der Nachricht 14 in dem Kommunikationsnetz 1 erfolgt.

**Fig. 7** illustriert, wie der Hub 3 in Bezug auf die Anbindungen der Leitungen 7, 9 bzw. der damit ausgebildeten Kommunikationskanäle 8 und 10 konkret ausgestaltet sein kann. Hier ist für den Anschluss der Leitungen 7 jeweils eine PHY 16 vorgesehen, während für den Anschluss der Leitung 9 ein MAC 17 vorgesehen ist.

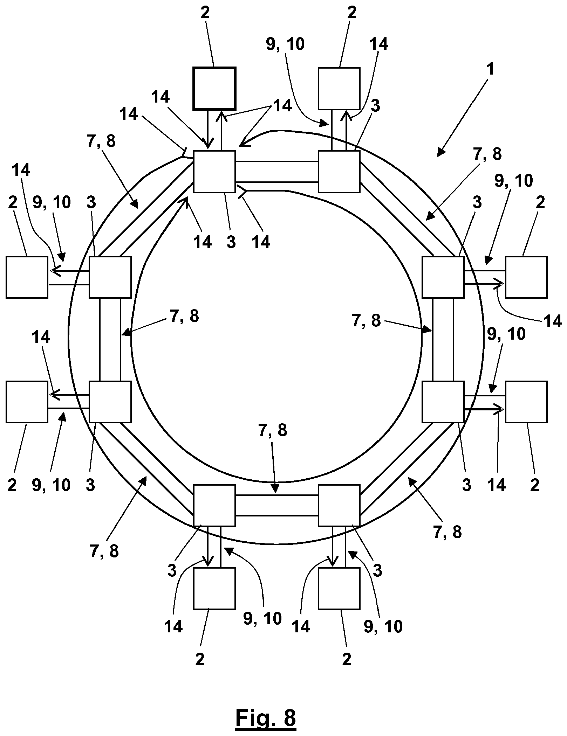

In Bezug auf ein gesamtes Kommunikationsnetz 1 mit einer Mehrzahl von Kommunikationspartnern 2, die jeweils über einen Hub 3 eingebunden sind, wobei die Hubs 3 durch Vollduplex-Kommunikationskanäle 8 ausbildende Leitungen 7 zu einem physikalischen Ring zusammengeschlossen sind, illustriert **Fig. 8** noch einmal die Ausbreitung einer Nachricht 14 von dem hier fett hervorgehobenen Kommunikationspartner 2. Die Nachricht 14 wird in zwei Kopien in einander entgegengesetzten Umlaufrichtungen auf den Ring gegeben und erreicht so jeden Hub 3 längs des Rings in beiden Kopien. Der jeweilige Kommunikationspartner 2 erhält die Kopie der Nachricht 14, die den zugehörigen Hub 3 zuerst erreicht, während die andere Kopie der Nachricht 14 von dem Hub 3 ausschließlich an den nächsten Hub 3 weitergeleitet wird. Der Umlauf beider Kopien der Nachricht 14 endet an dem Kommunikationspartner 2, von dem die Nachricht 14 ursprünglich ausgesandt wurde bzw. seinem Hub 3. Wenn der in Fig. 8 dargestellte Ring aus den Hubs 3 und den sie verbindenden Leitungen 7 an einer Stelle unterbrochen wird, erreicht jede von einem der Kommunikationspartner 2 ausgesandte Nachricht 14 dennoch alle Hubs 3, wenn auch nur noch in einer Kopie. Die Unterbrechung des Rings wird von dem aussendenden Kommunikationspartner 2 dadurch registriert, dass er während des Sendens weder die von ihm ausgesandte Nachricht 14 zurückerhält, noch eine andere Nachricht empfängt.

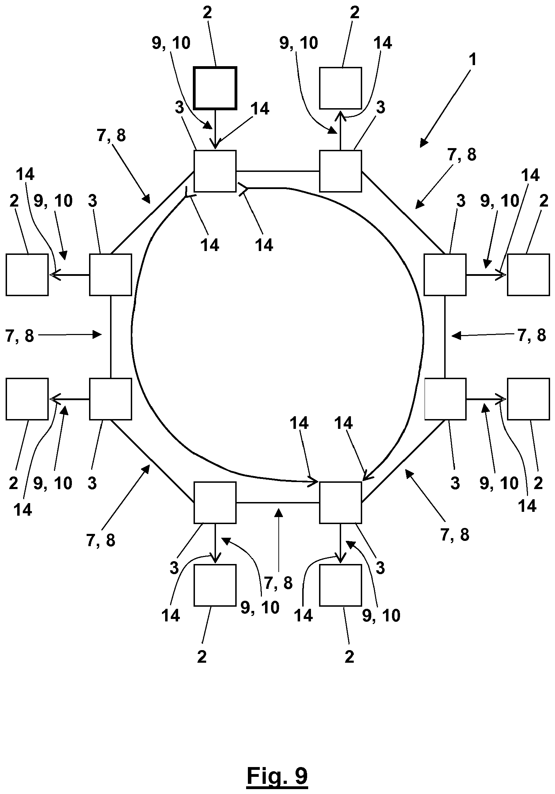

**Fig. 9** illustriert ein Fig. 8 grundsätzlich entsprechendes Kommunikationsnetz 1, bei dem jedoch die Leitungen 7 zwischen den Hubs 3 und die Leitungen 9 zwischen den Kommunikationspartnern 2 und den zugehörigen Hubs 3 jeweils Halbduplex-Kommunikationskanäle 8 bzw. 10 ausbilden. Dies bedeutet, dass die beiden Kopien der Nachricht 14, die in den entgegengesetzten Richtungen des Rings von dem Hub 3 des fett hervorgehobenen Kommunikationspartners 2 ausgesandt werden, nicht auf dieselbe Leitung 7 gelangen dürfen, um nicht miteinander zu kollidieren. Mit den anhand von Fig. 4 erläuterten verschärften Regeln für das Weiterleiten der Nachrichten durch die Hubs 3 wird dies verhindert. Das heißt, beide Kopien der Nachricht 14 enden an dem Hub 3, der von dem Hub 3 des fett hervorgehobenen Kommunikationspartners 2 in beiden Richtungen des Rings am weitesten entfernt ist. Dabei erhält der daran angeschlossene Kommunikationspartner 2 die Kopie der Nachricht 14, die zuerst an dem Hub 3 eingeht. Alle anderen Kommunikationspartner 2 erhalten die einzige Kopie der Nachricht 14, die an ihren Hubs 3 eingeht und von dort auch weitergeleitet wird. Bei der Ausführungsform des Kommunikationsnetzes 1 gemäß Fig. 9 reicht grundsätzlich eine Mindestlänge aller Nachrichten 14 aus, die länger als etwas mehr als die halbe Ringlaufzeit der Nachrichten 14 in dem ringförmigen Kommunikationsnetz 1 ist. Allerdings hängt die konkrete Mindestlänge von der Verteilung der Hubs 3 längs des Rings ab, so dass es auch hier sinnvoll ist, die Mindestlänge aller Nachrichten 14 länger als die volle Ringlaufzeit der Nachrichten in dem ringförmigen Kommunikationsnetz 1 zu wählen. Auch das Kommunikationsnetz 1 gemäß Fig. 9 bleibt funktionsfähig, wenn sein Ring an einer Stelle unterbrochen wird.

### BEZUGSZEICHENLISTE

- 1: Kommunikationsnetz
- 2: Kommunikationspartner
- 3: Hub
- 4: Port
- 5: Sender
- 6: Empfänger
- 7: Leitung
- 8: Kommunikationskanal
- 9: Leitung
- 10: Kommunikationskanal
- 11: Port
- 12: Sender
- 13: Empfänger
- 14: Nachricht
- 15: Nachricht
- 16: PHY
- 17: MAC

## Patentansprüche

1. Verfahren zum Einbinden eines Kommunikationspartners (2) über einen Hub (3), der drei Ports (4) mit jeweils einem Sender (5) und einem Empfänger (6) aufweist, in ein leitungsgebundenes Kommunikationsnetz (1) mit Vollduplex-Kommunikationskanälen zwischen den Ports (4) des Hubs (3) und dem Kommunikationspartner (2) und benachbarten Hubs (3), wobei jede Nachricht (14, 15), die an einem der drei Ports (4) von dem dortigen Empfänger (6) empfangen wird, nach vorgegebenen Regeln an die anderen Ports (4)weitergeleitet wird, deren Sender (5) die weitergeleitete Nachricht (14, 15) senden, **dadurch gekennzeichnet,**
- **dass** die Regeln, nach denen jede an einem der Ports (4) des Hubs (3) empfangene Nachricht an die anderen Ports (4) weitergeleitet wird, keine solchen sind, die sich auf den Inhalt der jeweiligen Nachricht (14, 15) beziehen, sondern ausschließlich solche, die sich auf den Zustand des Hubs (3) zu Beginn des Empfangens der jeweiligen Nachricht (14, 15) beziehen,
- **dass** nach den Regeln keine Nachricht (14, 15) an einen der anderen Ports (4) weitergeleitet wird, dessen Sender (5) zu Beginn des Empfangens der jeweiligen Nachricht (14, 15) an dem einen Port (4) bereits sendet, und
- **dass** nach den Regeln jede Nachricht (14, 15) an jeden der anderen Ports (4) weitergeleitet wird, dessen Sender (5) zu Beginn des Empfangens der jeweiligen Nachricht (14, 15) an dem einen Port (4) nicht sendet.

2. Verfahren zum Einbinden eines Kommunikationspartners (2) über einen Hub (3), der drei Ports (4) mit jeweils einem Sender (5) und einem Empfänger (6) aufweist, in ein leitungsgebundenes Kommunikationsnetz (1) mit Vollduplex- oder Halbduplex-Kommunikationskanälen zwischen den Ports (4) des Hubs (3) und dem Kommunikationspartner (2) und benachbarten Hubs (3), wobei jede Nachricht (14, 15), die an einem der drei Ports (4) von dem dortigen Empfänger (6) empfangen wird, nach vorgegebenen Regeln an die anderen Ports (4) weitergeleitet wird, deren Sender (5) die weitergeleitete Nachricht (14, 15) senden, **dadurch gekennzeichnet,**
- **dass** die Regeln, nach denen jede an einem der Ports (4) des Hubs (3) empfangene Nachricht an die anderen Ports (4) weitergeleitet wird, keine solchen sind, die sich auf den Inhalt der jeweiligen Nachricht (14, 15) beziehen, sondern ausschließlich solche, die sich auf den Zustand des Hubs (3) zu Beginn des Empfangens der jeweiligen Nachricht (14, 15) beziehen,
- **dass** nach den Regeln keine Nachricht (14, 15) an einen der anderen Ports (4) weitergeleitet wird, dessen Sender (5) zu Beginn des Empfangens der jeweiligen Nachricht (14, 15) an dem einen Port (4) bereits sendet, und
- **dass** nach den Regeln jede Nachricht (14, 15) an jeden der anderen Ports (4) weitergeleitet wird, dessen Sender (5) zu Beginn des Empfangens der jeweiligen Nachricht (14, 15) an dem einen Port (4) nicht sendet und dessen Empfänger (6) zu Beginn des Empfangens der jeweiligen Nachricht (14, 15) an dem einen Port (4) nicht empfängt.

3. Verfahren nach einem der vorhergehenden Ansprüche, wobei der Hub (3) über zwei seiner drei Ports (4) jeweils mit einem weiteren Hub (3) des Kommunikationsnetzes (1) verbunden wird und der Kommunikationspartner (2) an den dritten Port (4) angeschlossen wird.

4. Verfahren nach Anspruch 3, wobei die Hubs (3) zu einem ringförmigen Kommunikationsnetz (1) zusammengeschlossen werden.

5. Verfahren nach Anspruch 4, wobei eine Mindestlänge aller Nachrichten (14, 15) länger als eine Ringlaufzeit der Nachrichten (14, 15) in dem ringförmigen Kommunikationsnetz (1) von einem Hub (3) bis zurück zu demselben Hub (3) festgelegt wird, so dass der Hub (3) bei dem Wiedereintreffen der Nachricht (14, 15) an demselben Hub (3) noch mit dem Senden derselben Nachricht (14, 15) beschäftigt ist.

6. Hub (3) zum Einbinden eines Kommunikationspartners (2) in ein leitungsgebundenes Kommunikationsnetz (1) mit Vollduplex-Kommunikationskanälen zwischen Ports (4) des Hubs (3) und dem Kommunikationspartner (2) und benachbarten Hubs (3), wobei der Hub (3) drei Ports (4) aufweist, wobei jeder Port (4) einen Empfänger (6) und einen Sender (5) aufweist und wobei eine Steuerung des Hubs (3) derart ausgebildet ist, dass der Hub (3) jede Nachricht (14, 15), die der Empfänger (6) an einem der drei Ports (4) empfängt, nach vorgegebenen Regeln an die anderen Ports (4) weiterleitet, deren Sender (5) die Nachricht senden, **dadurch gekennzeichnet,**
- **dass** die Regeln, nach denen der Hub (3) jede an einem seiner Ports (4) empfangene Nachricht an die anderen Ports (4) weiterleitet, keine solchen sind, die sich auf den Inhalt der jeweiligen Nachricht (14, 15) beziehen, sondern ausschließlich solche, die sich auf den Zustand des Hubs (3) zu Beginn des Empfangens der jeweiligen Nachricht (14, 15) beziehen,
- **dass** der Hub (3) nach den Regeln keine Nachricht an einen der anderen Ports (4) weiterleitet, dessen Sender (5) zu Beginn des Empfangens der jeweiligen Nachricht (14, 15) an dem einen Port (4) bereits sendet, und
- **dass** der Hub (3) nach den Regeln jede Nachricht (14, 15) an jeden der anderen Ports (4) weiterleitet, dessen Sender (5) zu Beginn des Empfangens der jeweiligen Nachricht (14, 15) an dem einen Port (4) nicht sendet.

7. Hub (3) zum Einbinden eines Kommunikationspartners (2) in ein leitungsgebundenes Kommunikationsnetz (1) mit Vollduplex- oder Halbduplex-Kommunikationskanälen zwischen Ports (4) des Hubs (3) und dem Kommunikationspartner (2) und benachbarten Hubs (3), wobei der Hub (3) drei Ports (4) aufweist, wobei jeder Port (4) einen Empfänger (6) und einen Sender (5) aufweist und wobei eine Steuerung des Hubs (3) derart ausgebildet ist, dass der Hub (3) jede Nachricht (14, 15), die der Empfänger (6) an einem der drei Ports (4) empfängt, nach vorgegebenen Regeln an die anderen Ports (4) weiterleitet, deren Sender (5) die Nachricht senden, **dadurch gekennzeichnet,**
- **dass** die Regeln, nach denen der Hub (3) jede an einem seiner Ports (4) empfangene Nachricht an die anderen Ports (4) weiterleitet, keine solchen sind, die sich auf den Inhalt der jeweiligen Nachricht (14, 15) beziehen, sondern ausschließlich solche, die sich auf den Zustand des Hubs (3) zu Beginn des Empfangens der jeweiligen Nachricht (14, 15) beziehen,
- **dass** der Hub (3) nach den Regeln keine Nachricht an einen der anderen Ports (4) weiterleitet, dessen Sender (5) zu Beginn des Empfangens der jeweiligen Nachricht (14, 15) an dem einen Port (4) bereits sendet, und
- **dass** der Hub (3) nach den Regeln jede Nachricht (14, 15) an jeden der anderen Ports (4) weiterleitet, dessen Sender (5) zu Beginn des Empfangens der jeweiligen Nachricht (14, 15) an dem einen Port (4) nicht sendet und dessen Empfänger (6) zu Beginn des Empfangens der jeweiligen Nachricht (14, 15) an dem einen Port (4) nicht empfängt.

8. Hub (3) nach einem der Ansprüche 6 und 7, wobei die Regeln in einem Programmable Logic Device (PLD) der Steuerung programmiert sind.

9. Hub (3) nach einem der Ansprüche 6 bis 8, wobei an zwei der Ports (4) jeweils ein Anschluss mit einer PHY (16) für einen anderen Hub (3) und an dem dritten Port (4) ein Anschluss mit einem MAC (17) für den Kommunikationspartner (2) vorgesehen ist.

10. Kommunikationsnetz (1) mit mehreren Kommunikationspartnern (2) und mit mehreren Hubs (3) nach einem der Ansprüche 6 bis 9, wobei jeder Hub (3) über zwei seiner drei Ports (4) jeweils mit einem weiteren Hub (3) und über seinen dritten Port (4) mit einem der Kommunikationspartner (2) verbunden ist.

11. Kommunikationsnetz (1) mit mehreren Kommunikationspartnern (2) und mit mehreren Hubs (3) nach Anspruch 9, wobei jeder Hub (3) über seine beiden eine PHY (16) aufweisenden Anschlüsse jeweils mit einem weiteren der Hubs (3) und über seinen den MAC (17) aufweisenden Anschluss mit einem Kommunikationspartner (2) verbunden ist.

12. Kommunikationsnetz (1) nach Anspruch 10 oder 11, wobei die Hubs (3) zu einem Ringnetz zusammengeschlossen sind.

13. Kommunikationsnetz (1) nach Anspruch 12, wobei eine Mindestlänge aller Nachrichten (14, 15) länger als eine Ringlaufzeit der Nachrichten (14, 15) in dem ringförmigen Kommunikationsnetz (1) von einem Hub (3) bis zurück zu demselben Hub (3) ist, so dass der Hub (3) bei dem Wiedereintreffen der Nachricht (14, 15) an demselben Hub (3) noch mit dem Senden derselben Nachricht (14, 15) beschäftigt ist.

## Claims

1. Method of integrating a communication partner (2) via hub (3) which has three ports (4) each comprising a transmitter (5) and a receiver (6) into a grid-bound communication network (1) with full duplex communication channels between the ports (4) of the hub (3) and the communication partner (2) and neighbouring hubs (3), wherein each message (14, 15) which is received at one of the three ports (4) by the local receiver (6) is, according to predetermined rules, forwarded to the other ports (4) whose transmitters (5) transmit the forwarded message (14, 15), **characterised in**
- **that** the rules according to which each message received at one of the ports (4) of the hub (3) is forwarded to the other ports (4) are no such rules which are related to the content of the respective message (14, 15) but exclusively such rules which are related to the condition of the hub (3) at the beginning of the reception of the respective message (14, 15),
- **that**, according to the rules, no message (14, 15) is forwarded to any of the other ports (4), whose transmitter (5) already transmits at the beginning of the reception of the respective message (14, 15) at the one port (4), and
- **that**, according to the rules, each message (14, 15) is forwarded to each of the other ports (4), whose transmitter (5) does not transmit at the beginning of the reception of the respective message (14, 15) at the one port (4).

2. Method of integrating a communication partner (2) via hub (3) which has three ports (4) each comprising a transmitter (5) and a receiver (6) into a grid-bound communication network (1) with full duplex of half duplex communication channels between the ports (4) of the hub (3) and the communication partner (2) and neighbouring hubs (3), wherein each message (14, 15) which is received at one of the three ports (4) by the local receiver (6) is, according to predetermined rules, forwarded to the other ports (4) whose transmitters (5) transmit the forwarded message (14, 15), **characterised in**
- **that** the rules according to which each message received at one of the ports (4) of the hub (3) is forwarded to the other ports (4) are no such rules which are related to the content of the respective message (14, 15) but exclusively such rules which are related to the condition of the hub (3) at the beginning of the reception of the respective message (14, 15),
- **that** according to the rules no message (14, 15) is forwarded to any of the other ports (4), whose transmitter (5) already transmits at the beginning of the reception of the respective message (14, 15) at the one port (4), and
- **that**, according to the rules, each message (14, 15) is forwarded to each of the other ports (4), whose transmitter (5) does not transmit at the beginning of the reception of the respective message (14, 15) at the one port (4) and whose receiver (6) does not receive at the beginning of the reception of the respective message (14, 15) at the one port (4).

3. Method according to any of the preceding claims, wherein the hub (3), via two of its three ports (4), is connected to a further hub (3) of the communication network (1) and the communication partner (2) is connected to the third port (4).

4. Method according to claim 3, wherein the hubs (3) are interconnected to form a ring-shaped communication network (1).

5. Method according to claim 4, wherein a minimum length of all messages (14, 15) is set to be longer than a ring-runtime of the messages (14, 15) in the ring-shaped communication network (1) from one hub (3) back to the same hub (3) so that the hub (3) at the re-arrival of the message (14, 15) at the same hub (3) is still occupied with transmitting the same message (14, 15).

6. Hub (3) for integrating a communication partner (2) into a grid-bound communication network (1) with full duplex communication channels between ports (4) of the hub (3) and the communication partner (2) and neighbouring hubs (3), wherein the hub (3) comprises three ports (4), wherein each port (4) comprises a receiver (6) and a transmitter (5) and wherein a controller of the hub (3) is configured such that the hub (3) forwards each message (14, 15) which the receiver (6) receives at one of the three ports (4) is, according to predetermined rules, to the other ports (4) whose transmitters (5) transmit the message, **characterised in,**
- **that** the rules according to which the hub (3) forwards each message received at one of its ports (4) to the other ports (4) are no such rules which are related to the content of the respective message (14, 15) but exclusively such rules which are related to the condition of the hub (3) at the beginning of the reception of the respective message (14, 15),
- **that** the Hub (3), according to the rules, forwards no message (14, 15) to any of the other ports (4), whose transmitter (5) already transmits at the beginning of the reception of the respective message (14, 15) at the one port (4), and
- **that** the Hub (3), according to the rules, forwards each message (14, 15) to each of the other ports (4), whose transmitter (5) does not transmit at the beginning of the reception of the respective message (14, 15) at the one port (4).

7. Hub (3) for integrating a communication partner (2) into a grid-bound communication network (1) with full duplex of half duplex communication channels between ports (4) of the hub (3) and the communication partner (2) and neighbouring hubs (3), wherein the hub (3) comprises three ports (4), wherein each port (4) comprises a receiver (6) and a transmitter (5) and wherein a controller of the hub (3) is configured such that the hub (3) forwards each message (14, 15) which the receiver (6) receives at one of the three ports (4) is, according to predetermined rules, to the other ports (4) whose transmitters (5) transmit the message, **characterised in,**
- **that** the rules according to which the hub (3) forwards each message received at one of its ports (4) to the other ports (4) are no such rules which are related to the content of the respective message (14, 15) but exclusively such rules which are related to the condition of the hub (3) at the beginning of the reception of the respective message (14, 15),
- **that** the Hub (3), according to the rules, forwards no message (14, 15) to any of the other ports (4), whose transmitter (5) already transmits at the beginning of the reception of the respective message (14, 15) at the one port (4), and
- **that** the Hub (3), according to the rules, forwards each message (14, 15) to each of the other ports (4), whose transmitter (5) does not transmit at the beginning of the reception of the respective message (14, 15) at the one port (4) and whose receiver (6) does not receive at the beginning of the reception of the respective message (14, 15) at the one port (4)

8. Hub (3) according to any of the claims 6 and 7, wherein the rules are programmed in a Programmable Logic Device (PLD) of the controller.

9. Hub (3) according to any of the claims 6 to 8, wherein at each of two of the ports (4) a connector with a PHY (16) for another hub (3) and at the third port (4) a connector with a MAC (17) for the communication partner (2) is provided.

10. Communication network (1) comprising a plurality of communication partners (2) and a plurality of hubs (3) according to any of the claims 6 to 9, wherein each hub (3) is connected via two of its three ports (4) with a further hub (3), respectively, and via its third port (4) with one of the communication partners (2).

11. Communication network (1) comprising a plurality of communication partners (2) and a plurality of hubs (3) according to claim 9, wherein each hub (3) is connected via its two connectors comprising a PHY (16) with a further one of the hubs (3), respectively, and via its connector comprising the MAC (17) with a communication partner (2).

12. Communication network (1) according to claim 10 or 11, wherein the hubs (3) are interconnected to form a ring net.

13. Communication network (1) according to claim 12, wherein a minimum length of all messages (14, 15) is longer than a ring-runtime of the messages (14, 15) in the ring-shaped communication network (1)from one hub (3) back to the same hub (3) so that the hub (3) at re-arrival of the message (14, 15) at the same hub (3) is still occupied with transmitting the same message (14, 15).

## Revendications

1. Procédé pour l'intégration d'un partenaire de communication (2) par l'intermédiaire d'un hub (3), qui comprend trois ports (4) avec chacun un émetteur (5) et un récepteur (6), dans un réseau de communication filaire (1) avec des canaux de communication en duplex intégral entre les ports (4) du hub (3) et le partenaire de communication (2) et des hubs (3) adjacents, chaque message (14, 15) qui est reçu au niveau d'un des trois ports (4) par le récepteur (6) qui s'y trouve, étant transmis, selon des règles prédéterminées, aux autres ports (4), dont les émetteurs (5) envoient le message (14, 15) transmis, **caractérisé en ce que**
- les règles selon lesquelles chaque message reçu au niveau d'un des ports (4) du hub (3) est transmis aux autres ports (4), ne sont pas des règles qui concernent le contenu du message (14, 15) correspondant, mais exclusivement des règles qui concernent l'état du hub (3) au début de la réception du message (14, 15) correspondant,
- selon les règles, aucun message (14, 15) n'est transmis à un des autres ports (4) dont l'émetteur (5) émet déjà au début de la réception du message (14, 15) correspondant au niveau du port (4) et
- selon les règles, chaque message (14, 15) est transmis à chacun des autres ports (4) dont l'émetteur (5) n'émet pas au début de la réception du message (14, 15) correspondant au niveau du port (4).

2. Procédé pour l'intégration d'un partenaire de communication (2) par l'intermédiaire d'un hub (3), qui comprend trois ports (4) avec chacun un émetteur (5) et un récepteur (6), dans un réseau de communication filaire (1) avec des canaux de communication en duplex intégral ou en semi-duplex entre les ports (4) du hub (3) et le partenaire de communication (2) et des hubs (3) adjacents, chaque message (14, 15) qui est reçu au niveau d'un des trois ports (4) par le récepteur (6) qui s'y trouve, étant transmis, selon des règles prédéterminées, aux autres ports (4), dont les émetteurs (5) envoient le message (14, 15) transmis, **caractérisé en ce que**
- les règles selon lesquelles chaque message reçu au niveau d'un des ports (4) du hub (3) est transmis aux autres ports (4), ne sont pas des règles qui concernent le contenu du message (14, 15) correspondant, mais exclusivement des règles qui concernent l'état du hub (3) au début de la réception du message (14, 15) correspondant,
- selon les règles, aucun message (14, 15) n'est transmis à un des autres ports (4) dont l'émetteur (5) émet déjà au début de la réception du message (14, 15) correspondant au niveau du port (4) et
- selon les règles, chaque message (14, 15) est transmis à chacun des autres ports (4) dont l'émetteur (5) n'émet pas au début de la réception du message (14, 15) correspondant au niveau du port (4) et dont le récepteur (6) ne reçoit pas, au début de la réception du message (14, 15) correspondant au niveau du port (4).

3. Procédé selon l'une des revendications précédentes, le hub (3) étant relié, par l'intermédiaire de deux de ses trois ports (4), avec un autre hub (3) du réseau de communication (1) et le partenaire de communication (2) est connecté au troisième port (4).

4. Procédé selon la revendication 3, les hubs (3) étant connectés ensemble en un réseau de communication annulaire (1).

5. Procédé selon la revendication 4, une longueur minimale de tous les messages (14, 15) est fixée de façon à être supérieure à un temps de propagation annulaire des messages (14, 15) dans le réseau de communication annulaire (1), à partir d'un hub (3) et retour jusqu'au même hub (3), de façon à ce que le hub (3) soit encore occupé par l'émission du même message (14, 15) lors du retour du message (14, 15) au niveau du même hub (3).

6. Hub (3) pour l'intégration d'un partenaire de communication (2) dans un réseau de communication filaire (1) avec des canaux de communication en duplex intégral entre les ports (4) du hub (3) et le partenaire de communication (2) et des hubs (3) adjacents, le hub (3) comprenant trois ports (4), chaque port (4) comprenant un récepteur (6) et un émetteur (5) et une commande du hub (3) étant conçu de façon à ce que le hub (3) transmette chaque message (14, 15) que le récepteur (6) reçoit au niveau des trois ports (4), selon des règles prédéterminées, aux autres ports (4), dont les émetteurs envoient le message, **caractérisé en ce que**
- les règles selon lesquelles le hub (3) transmet chaque message reçu au niveau d'un des ports (4) du hub (3) aux autres ports (4), ne sont pas des règles qui concernent le contenu du message (14, 15) correspondant, mais exclusivement des règles qui concernent l'état du hub (3) au début de la réception du message (14, 15) correspondant,
- le hub (3) ne transmet, selon les règles, aucun message à un des autres ports (4) dont l'émetteur (5) émet déjà au début de la réception du message (14, 15) correspondant au niveau du port (4) et
- le hub (3) transmet, selon les règles, chaque message (14, 15) à chacun des autres ports (4), dont l'émetteur (5) n'émet pas au début de la réception du message (14, 15) correspondant au niveau du port (4).

7. Hub (3) pour l'intégration d'un partenaire de communication (2) dans un réseau de communication filaire (1) avec des canaux de communication en duplex intégral et en semi-duplex entre les ports (4) du hub (3) et le partenaire de communication (2) et des hubs (3) adjacents, le hub (3) comprenant trois ports (4), chaque port (4) comprenant un récepteur (6) et un émetteur (5) et une commande du hub (3) étant conçu de façon à ce que le hub (3) transmette chaque message (14, 15) que le récepteur (6) reçoit au niveau des trois ports (4), selon des règles prédéterminées, aux autres ports (4), dont les émetteurs envoient le message, **caractérisé en ce que**
- les règles selon lesquelles chaque message reçu au niveau d'un des ports (4) du hub (3) est transmis aux autres ports (4), ne sont pas des règles qui concernent le contenu du message (14, 15) correspondant, mais exclusivement des règles qui concernent l'état du hub (3) au début de la réception du message (14, 15) correspondant,
- le hub (3) ne transmet, selon les règles, aucun message à un des autres ports (4) dont l'émetteur (5) émet déjà au début de la réception du message (14, 15) correspondant au niveau du port (4) et
- le hub (3) transmet, selon les règles, chaque message (14, 15) à chacun des autres ports (4), dont l'émetteur (5) n'émet pas au début de la réception du message (14, 15) correspondant au niveau du port (4) et dont le récepteur (6) ne reçoit pas au début de la réception du message (14, 15) correspondant au niveau du port (4).

8. Hub (3) selon l'une des revendications 6 et 7, les règles étant programmées dans un Programmable Logic Device (PLD) de la commande.

9. Hub (3) selon l'une des revendications 6 à 8, moyennant quoi, au niveau de deux des ports (4), est prévue une connexion avec une couche physique PHY (16) pour un autre hub (3) et, au niveau du troisième port (4), est prévue une connexion avec un MAC (17) pour le partenaire de communication (2).

10. Réseau de communication (1) avec plusieurs partenaires de communication (2) et avec plusieurs hubs (3) selon l'une des revendications 6 à 9, chaque hub (3) étant relié, par l'intermédiaire de deux de ses trois ports (4), avec un autre hub (3) et, par l'intermédiaire de son troisième port (4), avec un des partenaires de communication (2).

11. Réseau de communication (1) avec plusieurs partenaires de communication (2) et avec plusieurs hubs (3) selon la revendication 9, chaque hub (3) étant relié, par l'intermédiaire de ses deux connexions comprenant une couche physique PHY (16), avec un autre des hubs (3) et, par l'intermédiaire de sa connexion comprenant le MAC (17), avec un partenaire de communication (2).

12. Réseau de communication (1) selon la revendication 10 ou 11, les hubs (3) étant connectés ensemble en un réseau annulaire.

13. Réseau de communication (1) selon la revendication 12, une longueur minimale de tous les messages (14, 15) étant supérieure à un temps de propagation annulaire des messages (14, 15) dans le réseau de communication annulaire (1), à partir d'un hub (3) et retour jusqu'au même hub (3), de façon à ce que le hub (3) soit encore occupé par l'émission du même message (14, 15) lors du retour du message (14, 15) au même hub (3).
